# FASCICULE DE BREVET EUROPEEN

(11) **EP 3 383 220 B1**
(45) Date de publication et mention de la délivrance du brevet: **01.04.2020**
(21) Numéro de dépôt: 16784213.7
(22) Date de dépôt: 20.10.2016
(51) Int. Cl.: A44C 15/00, A44C 27/00, B41M 5/28, B41M 5/34, B44C 5/00, B44F 1/10, C09K 9/00, G03C 7/00, G04B 45/00, G03C 1/00, B44C 1/00, G04B 19/12, G04B 19/30, G04B 29/02

(54) **PROCEDE DE DECORATION SELECTIF D'UN COMPOSANT HORLOGER**
SELEKTIVES DEKORATIONSVERFAHREN EINER UHRENKOMPONENTE
METHOD FOR SELECTIVE DECORATION OF A TIMEPIECE COMPONENT

(30) Priorité: 30.11.2015 EP 15196999
(43) Date de publication de la demande: 10.10.2018
(73) Titulaire: The Swatch Group Research and Development Ltd, 2074 Marin (CH)
(72) Inventeur: FRANÇOIS, Nicolas, 2000 Neuchâtel (CH)
(74) Mandataire: ICB SA
(86) Numéro de dépôt international: PCT/EP2016/075264
(87) Numéro de publication internationale: WO 2017/092927

(56) Documents cités:
- EP-A1- 0 600 307
- WO-A1-00/69303
- CH-A5- 694 026
- US-A- 5 972 233
- US-A1- 2009 246 370
- US-A1- 2014 360 228

## Description

L'invention concerne un procédé de fabrication d'un composant horloger, ledit composant horloger étant fabriqué dans un premier matériau.

### ARRIERE PLAN TECHNOLOGIQUE

Il est actuellement connu plusieurs solutions afin de produire des composants colorés pour réaliser des pièces d'horlogerie aux multiples couleurs.

Une première solution consiste à teinter le matériau dans la masse. Pour cela, le matériau, qui généralement est un matériau du type plastique ou un de ses dérivés, est mélangé avec un colorant lorsqu'il se trouve dans une forme liquide. Une fois le mélange effectué, le matériau sous forme liquide est injecté dans des moules pour former les composants.

Une seconde solution consiste à se munir du composant fabriqué par injection ou usinage et de lui appliquer un revêtement. Un tel revêtement peut se présenter sous la forme d'une peinture ou d'une encre.

Toutefois, un inconvénient de ces technologies est qu'elles posent des problèmes de processus de fabrication. En effet, le passage d'une couleur à une autre nécessite des opérations de nettoyage entre les différentes couleurs sans pour autant éliminer les risques de pollution entre les différentes couleurs.

La réalisation de motifs spécifiques comme des écritures nécessite la réalisation d'un décor ayant la forme désirée qui est assemblé au composant. Par exemple, le composant comprend une creusure ayant une forme identique à celle du décor afin que ce dernier puisse s'y insérer. L'inconvénient de cette méthode est qu'elle est complexe à mettre en œuvre car elle nécessite des moules spécifiques.

La personnalisation peut également se faire via l'utilisation de procédés tels que la sérigraphie ou la tampographie mais ceux-ci nécessitent l'utilisation d'outillage (écran de sérigraphie ou cliché de tampographie) qui nécessitent d'être changés pour la réalisation de motifs différents. De plus, un outillage est nécessaire pour chaque couleur souhaitée sur la décoration. Les outillages doivent en plus nécessiter nettoyage et maintenance entre chaque lot de fabrication.

Un autre moyen est l'impression numérique, mais cette technique qui nécessite une machine coûteuse pour l'industrie ne peut être appliquée que sur des substrats en 2 dimensions (cadrans, bracelets simples) et n'est pas valable pour des composants avec des formes plus complexes.

Le document US2009024637 décrit un procédé de coloration de cristaux ou objets décoratifs comportant des masques et couches appliquées l'une sur l'autre, chaque couche composée d'un pigment réagissant à un niveau d'énergie thermique spécifique apporté dans un four de façon homogène.

Le document CH694026 décrit un procédé de fabrication d'un cadran de montre comportant un matériau photographique composé de trois pigments rouge, jaune et cyan, chacun réagissant à un niveau d'énergie lumineuse spécifique apporté dans une camera d'illumination de façon homogène.

### RESUME DE L'INVENTION

L'invention concerne un procédé de fabrication d'un composant dont la coloration peut être entière ou sélective et facilement adaptée.

A cet effet, l'invention consiste en un procédé de fabrication d'un composant horloger ou joaillier, tel que décrit dans la revendication 1. Des modes de réalisation avantageux sont décrits dans les revendications dépendantes.

### BREVE DESCRIPTION DES FIGURES

Les avantages d'un tel élément d'habillage apparaîtront clairement à la lecture de la description qui va suivre et à l'examen du dessin qui l'illustre à titre d'exemple et dans lequel :
- la figure 1 représente de manière schématique un objet portable comme une pièce d'horlogerie selon la présente invention ;
- les figures 2 à 5 représentent de manière schématique divers modes d'exécution de la présente invention ;
- la figure 6 représente de manière schématique un premier mode de réalisation de la présente invention ;
- la figure 7 représente de manière schématique un second mode de réalisation de la présente invention.

### DESCRIPTION DETAILLEE

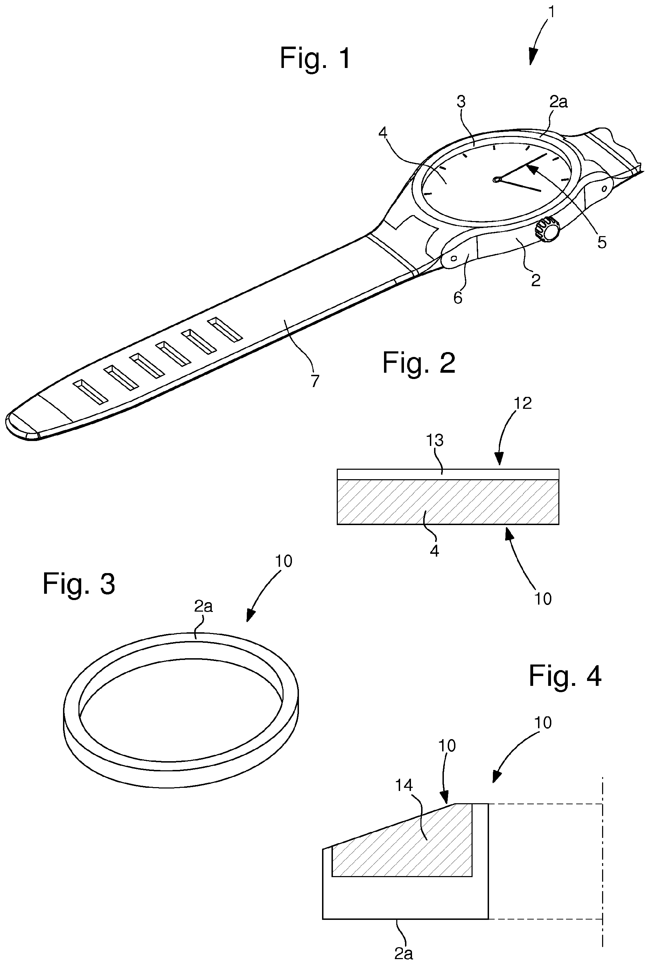

Sur la figure 1 est représenté un objet portable 1 selon l'invention, un tel objet portable se présentant ici sous la forme d'une pièce d'horlogerie. Une telle pièce d'horlogerie comprend un boitier 2 fermé par une glace 3, ce boitier 2 forme un logement dans lequel un module horloger, électronique ou mécanique ou électromécanique est agencé. Le boitier 2 pourra également comprendre une lunette 2a intégrée ou tournante. Ce module horloger fournit au moins une information à un module affichage comprenant, par exemple, un cadran 4 et des aiguilles 5.

Ce boitier 2 est également muni de paires de cornes 6 afin de pouvoir y fixer un bracelet 7, ce dernier pouvant se présenter sous la forme de deux brins ou d'un unique brin fixé par chaque extrémité à une paire de cornes 6.

Un tel objet portable 1 est donc muni d'une multitude de composants 10 horloger personnalisables pouvant être par exemple le bracelet, le boitier, la lunette, ou encore le cadran.

Selon l'invention, cette personnalisation est irréversible et possible par l'utilisation combinée d'un élément chromique 12 et d'un procédé de fabrication inédit.

Dans une première étape, le procédé consiste à se munir du composant qui sera coloré. Pour se faire, le composant aura subi au plus tard lors de cette première étape, une transformation permettant au composant d'être combiné à l'élément chromique 12.

Cet élément chromique 12 est un élément qui réagit suite à un apport d'énergie et qui est constitué d'un pigment associé à une matrice.

Le pigment utilisé pourra être du type photochromique ou du type thermochromique. Dans le cas d'un pigment photochromique, le changement de couleur se fait suite à un apport d'énergie lumineuse. Cette énergie lumineuse apportée par une source de lumière naturelle ou artificielle excite les molécules du pigment qui réagissent alors. Cette réaction consiste en un changement de couleur.

Dans le cas d'un pigment thermochromique, le changement de couleur se fait suite à un apport d'énergie thermique. Cette énergie thermique est apportée par une source de chaleur naturelle comme le soleil ou le corps humain ou artificielle. Cette énergie thermique excite les molécules du pigment qui réagissent alors. Cette réaction consiste en un changement de couleur.

Dans le cas de la présente invention qui consiste à colorer des composants 10, les pigments utilisés seront du type irréversible c'est-à-dire que le changement de couleur est définitif. On comprend que l'apport d'énergie suffit à modifier la couleur et que le fait de stopper l'apport d'énergie n'entraine pas un retour à la couleur initiale des pigments utilisés.

La matrice de l'élément chromique 12 consiste en un support dans lequel le pigment est mélangé de sorte à obtenir un élément chromique ayant une consistance lui permettant d'être combiné au composant.

Dans un premier mode d'exécution, la matrice est une matrice du type laque ou encre.

Dans le cas d'une laque dite dure, la matrice pourra être issue de la famille des acryliques ou des copolymères d'acryliques pour une haute résistance aux rayures et aux UV ou un liant polyuréthane pour une haute résistance à l'abrasion, un dispersant du type sel d'acide polycarboxilique, un plastifiant du type benzoate, un solvant de type glycol ou esters et d'autres additifs comme agents Anti-UV pour le polyuréthane afin d'éviter des dégradation du polymère.

Dans le cas d'une laque dite souple, la matrice sera issue de la famille des silicones ou des polyurethanes.

Dans le cas d'une encre, la matrice est issue de la famille des acryliques pour une haute résistance aux UV et une haute transparence ou de la famille des polyuréthanes pour une haute résistance à l'abrasion ou encore une encre silicone pour des substrats souples; d'un dispersant ou agent anti-floculant du type sel d'acide polycarboxilique, d'un plastifiant et promoteur d'adhésion de type sulfonamide et d'un solvant de type glycol ou esters.

Cette matrice se présentant sous la forme de laque souple ou encre permet, après fabrication du composant 10, d'avoir une étape lors de laquelle ledit composant 10 est recouvert d'une couche 13 de cette laque souple ou encre comme visible à la figure 2. Cette couche 13 d'encre ou de laque peut être déposée par un spray ou par passage dans un bain ou tout autre procédé approprié.

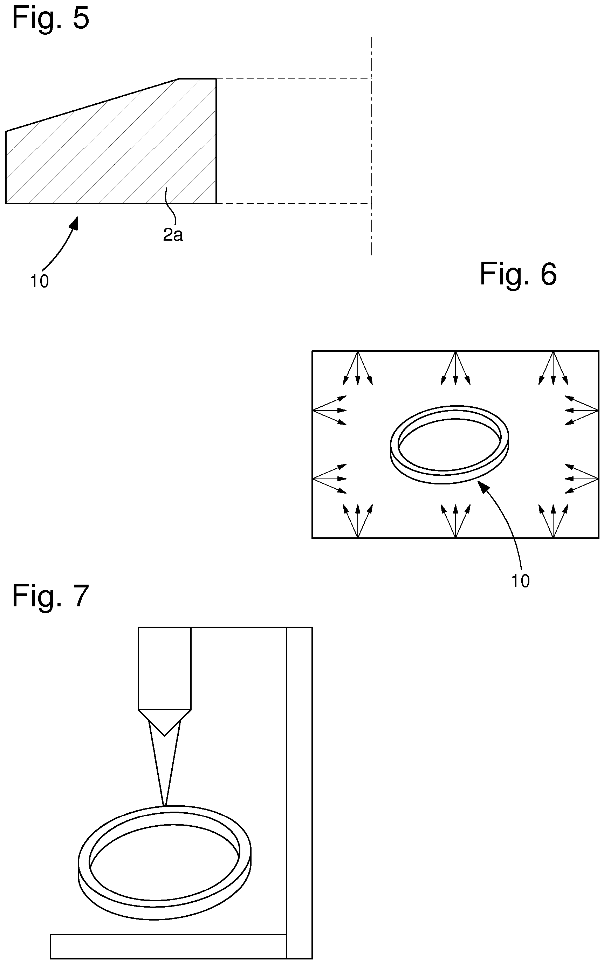

Dans un second mode d'exécution, la matrice est un insert 14, visible aux figures 3 et 4, se logeant dans un logement du composant 10 ou la matrice est le composant en lui-même comme visible à la figure 5. En effet, dans ce cas, la matrice est le matériau qui est utilisé pour la fabrication du composant. Généralement, un tel matériau est du type plastique et est facile à injecter ou surmouler. Une telle matrice pourra être du type thermoplastique comme, par exemple, une résine type acrylonitrile butadiene styrene, Polyamide ou Polymetacrylate de methyl, un agent dispersant et compatibilisant de type copolymères modifiés/greffés, un plastifiant de type benzoate ou sulfonamide., thermodurcissable comme une résine de type époxy, acrylique ou polyuréthane élastomère thermoplastique comme une résine de type polyuréthane.

La matrice peut également être du type élastomère vulcanisé, par injection, surmoulage ou compression, comme par exemple une résine élastomère de type nitrile butadiène ou nitrile butadiène hydrogéné ou fluoropolymère élastomère, ou silicone, un système de vulcanisation adapté à la résine sélectionnée comme du souffre et des accélérateurs de vulcanisation type thiurams ou peroxydes et ses dérivés, des agents de couplages éventuels (type silanes).

Dans ce cas, le matériau servant de matrice et le pigment sont mélangés avant d'être mis en forme par des techniques classiques de moulage par injection ou surmoulage. Il en résulte un composant fini, du type plastique, qui intègre directement le pigment.

Une fois combinés avec le pigment, les composants sont stockés jusqu'à ce que la prochaine étape commence.

Dans une seconde étape, le composant combiné avec l'élément chromique est placé dans un appareil de coloration. Cet appareil de coloration dépend de la technologie utilisée c'est-à-dire du type de pigment utilisé mais aussi du mode d'exécution voulu.

Selon un premier mode de réalisation ne formant pas partie de l'invention, la coloration du composant est totale c'est-à-dire que toute la surface du composant est colorée.

Selon un second mode de réalisation, la coloration du composant est partielle c'est-à-dire que la coloration n'est effectuée que sur certaines parties selon un motif prédéfini.

Or, suivant le mode de réalisation, l'appareil utilisé pour l'apport d'énergie au pigment diffère.

Pour le premier mode de réalisation ne formant pas partie de l'invention, un appareil permettant un rayonnement énergétique homogène comme visible à la figure 6 depuis toutes les directions sera utilisé. Cet appareil peut se présenter sous la forme d'une enceinte dans laquelle le composant est placé, cette enceinte est conçue de sorte que les parois intérieures qui la composent sont toutes munies d'émetteurs d'énergie permettant la diffusion totale et homogène de l'énergie.

Pour le second mode de réalisation correspondant à l'invention, un appareil permettant un rayonnement énergétique focalisé sera utilisé comme visible à la figure 7. Cet appareil peut se présenter sous la forme d'un robot comprenant un bras articulé sur lequel est fixée une tête émettrice d'énergie. Cette tête émettrice d'énergie est conçue pour apporter localement de l'énergie.

Dans une troisième étape, la coloration du composant a lieu. Cette étape de coloration consiste à faire fonctionner l'appareil utilisé pour l'apport d'énergie selon un programme spécifique.

En effet, il est astucieusement prévu que l'élément chromique puisse réagir graduellement. On comprend par-là que l'élément chromique réagit différemment selon le niveau d'énergie apporté de sorte que plus on apporte d'énergie et plus la réaction de l'élément chromique c'est-à-dire de son pigment est importante et donc plus la coloration est intense.

Dans le cas d'un élément chromique comprenant un pigment photochromique, la variation de couleur dépend de la puissance émise par la source lumineuse et de l'énergie reçue par cet élément chromique en tout point. Ainsi, tant que l'énergie reçue n'affecte ni la matrice ni le pigment, plus la puissance lumineuse émise est forte et plus la variation de coloration est forte et rapide.

Dans le cas d'un élément chromique comprenant un pigment thermochromique, la variation de couleur dépend de l'énergie thermique qu'elle reçoit. Cette énergie thermique correspond à une élévation de température. Ainsi, plus l'intensité thermique est intense et plus la variation de coloration est forte et rapide.

Par conséquent, le programme pilotant l'appareil utilisé pour l'apport d'énergie est conçu pour apporter la quantité d'énergie nécessaire à la coloration totale ou partielle du composant en jouant sur les paramètres de durée d'apport et d'intensité ainsi sur que la localisation de l'apport, pour les colorations partielles.

Ainsi, dans le cas d'une coloration totale, le composant est placé dans l'enceinte formant l'appareil d'apport d'énergie dont les parois intérieures sont munies d'émetteurs d'énergie. Le programme de coloration ajuste alors l'intensité et la durée d'exposition pour que la totalité de la surface du composant passe d'une couleur à une autre.

Ainsi, dans le cas d'une coloration partielle, le composant est placé sous le robot formant l'appareil d'apport d'énergie. Le programme de coloration ajuste alors l'intensité et la durée d'exposition mais aussi la position de la tête émettrice d'énergie montée sur un bras articulé. Cet ajustement permet d'apporter de l'énergie à l'endroit précis où la coloration doit être faite. En effet, la technique de coloration partielle est principalement utilisée pour la réalisation de motifs tels que des inscriptions ou des dessins. Par conséquent, il est nécessaire d'avoir une grande précision.

Il pourra être envisagé que, selon la technologie utilisée, le point de focalisation sera plus ou moins large afin de modifier la coloration sur une portion plus ou moins large.

Dans le cas où le matériau du composant incorpore directement les pigments, un avantage est la durabilité de la coloration puisque les inconvénients de détérioration d'une couche de peinture ne sont pas présents.

Une fois que la coloration totale ou partielle est effectuée, une étape suivante consiste à retirer le composant de l'appareil d'apport d'énergie et à le stocker.

Dans une variante avantageuse, l'élément chromique est conçu de sorte à permettre une pluralité de variation de couleur. Cette variante utilise un élément chromique dont le composé est muni d'une pluralité de pigments, chaque pigment permettant d'avoir une couleur. Ainsi, il est possible d'avoir un composé qui, selon l'apport d'énergie, permet différentes variations de couleur. Cette variation de la couleur n'est pas une variation de l'intensité de la couleur c'est-à-dire une couleur variant d'une teinte pale à une teinte éclatante mais un pigment capable de passer d'une teinte grise vers une teinte bleue ou vers une teinte rouge ou vers une teinte rose selon l'apport d'énergie. Par exemple, le composé pourra être un composé RJB c'est à dire comprendre un pigment rouge, un pigment jaune et un pigment bleu.

Une telle variante permet avantageusement d'améliorer la flexibilité du processus de fabrication. En effet, étant donné qu'il est possible d'avoir une pluralité de couleurs différentes selon l'apport d'énergie, il devient possible de produire le composant à une couleur désirée en modifiant uniquement l'apport d'énergie. Par conséquent, on obtient un processus de fabrication qui, à partir d'une base unique, permet d'obtenir des colorations différentes en fonction de l'apport d'énergie.

Un autre avantage de cette variante est qu'elle permet une personnalisation plus poussée. En effet, si la présente invention permet une coloration partielle ou sélective et que cette variante permet un choix de la couleur de coloration selon l'apport d'énergie, alors il devient possible de procéder à une coloration du composant de sorte que ce dernier présente une multitude de couleurs.

Dans une autre variante, il est envisageable que le procédé selon l'invention soit opéré lors de la vente de l'objet portable comprenant le composant. En effet, dans le cas d'une montre, il peut être avantageux de proposer un service de personnalisation à la demande. Ce service de personnalisation à la demande consiste à permettre aux clients de modifier l'apparence esthétique de divers composants de l'objet portable selon l'invention directement au moment de la vente. Par exemple, dans le cas d'une montre, cette variante permet au client qui vient acheter sa montre d'avoir la possibilité de modifier l'apparence de sa montre pour la rendre unique. Le point de vente est alors équipé d'au moins un appareil d'apport d'énergie utilisé pour modifier localement ou totalement la couleur d'un des composants de ladite montre.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Bien entendu, le composant selon l'invention pourra être un composant joailler choisi dans la liste comprenant : boucle d'oreille, bracelet, bague, pendentif, collier, bouton de manchette, broche.

## Revendications

1. Procédé de fabrication d'un composant (10) horloger ou joaillier, ledit composant étant fabriqué dans un premier matériau, le procédé comprenant les étapes suivantes :
- se munir du composant, ce dernier ayant subi au plus tard lors de cette étape, un traitement visant à combiner le composant avec un élément (12) chromique, ledit élément chromique étant constitué d'au moins un pigment du type photochromique ou thermochromique apte à réagir de manière irréversible à un apport d'énergie lumineuse ou thermique et d'une matrice pour lier ledit pigment, l'élément chromique (12) étant un composé de trois pigments, un pigment rouge, un pigment jaune et un pigment bleu, chaque pigment étant choisi pour réagir à un niveau d'énergie spécifique ;
- placer ledit composant dans un appareil d'apport d'énergie apte à apporter au moins localement de l'énergie audit composant ;
- utiliser l'appareil d'apport d'énergie selon un programme de fonctionnement prédéfini afin de fournir au moins localement de l'énergie audit élément chromique de sorte à entrainer une réaction de type irréversible de son pigment;
- retirer le composant de l'appareil d'apport d'énergie; le procédé étant **caractérisé en ce que** l'appareil d'apport d'énergie permet un rayonnement énergétique focalisé.

2. Procédé selon la revendication 1, **caractérisé en ce que** le pigment est du type photochromique.

3. Procédé selon la revendication 1, **caractérisé en ce que** le pigment est du type thermochromique.

4. Procédé selon l'une des revendications précédentes, **caractérisé en ce que** le pigment est apte à passer d'une première couleur à une seconde couleur, la teinte de la seconde couleur dépendant du niveau d'énergie apporté.

5. Procédé selon l'une des revendications précédentes, **caractérisé en ce que** la matrice est du type laque dure constituée d'un liant dans lequel le pigment est mélangé, ce liant étant choisi dans la famille des acryliques, des copolymères d'acryliques ou des polyuréthanes, un dispersant du type sel d'acide polycarboxilique, un plastifiant du type benzoate, un solvant choisi dans la famille des glycols ou esters.

6. Procédé selon l'une des revendications 1 à 5, **caractérisé en ce que** la matrice est du type laque souple constituée d'un liant dans lequel le pigment est mélangé, ledit liant étant choisi dans la famille des silicones ou des polyuréthanes.

7. Procédé selon l'une des revendications 1 à 5, **caractérisé en ce que** la matrice est du type encre constituée d'un liant choisi dans la famille des acryliques ou des polyuréthanes ou des silicones; d'un dispersant ou agent anti-floculant du type sel d'acide polycarboxilique, d'un plastifiant et promoteur d'adhésion de type sulfonamide et d'un solvant choisi dans la famille des glycols ou esters.

8. Procédé selon l'une des revendications 1 à 6, **caractérisé en ce que** le premier matériau et la matrice ne forment qu'un de sorte que le pigment puisse être directement intégré audit composant.

9. Procédé selon la revendication 7, **caractérisé en ce que** l'élément chromique est une couche (13) au moins partiellement déposée sur la surface dudit composant.

10. Procédé selon les revendications 5 ou 6, **caractérisé en ce que** l'élément chromique se présente sous la forme d'un insert (14).

11. Procédé selon la revendication 2, **caractérisé en ce que** l'appareil d'apport d'énergie est agencé pour fournir une énergie lumineuse.

12. Procédé selon la revendication 3, **caractérisé en ce que** l'appareil d'apport d'énergie est agencé pour fournir une énergie thermique.

13. Procédé selon l'une des revendications précédentes, **caractérisé en ce que** l'appareil d'apport d'énergie est agencé pour fournir l'énergie en un point précis.

## Patentansprüche

1. Verfahren zur Herstellung einer Uhren- oder Schmuckkomponente (10), wobei die Komponente aus einem ersten Material hergestellt ist und das Verfahren die folgenden Schritte umfasst:
- Bereitstellen der Komponente, wobei letztere spätestens während dieses Schritts einer Behandlung unterzogen wird, die darauf abzielt, die Komponente mit einem Chromelement (12) zu verbinden, wobei das Chromelement aus mindestens einem photochromen oder thermochromen Pigment, das geeignet ist, irreversibel auf eine Zufuhr von Licht- oder Wärmeenergie zu reagieren, und aus einer Matrix zum Binden des Pigments besteht, wobei das Chromelement (12) eine Verbindung aus drei Pigmenten ist, einem roten, einem gelben und einem blauen Pigment, wobei jedes Pigment so ausgewählt wird, dass es auf ein bestimmtes Energieniveau reagiert;
- Einbringen der Komponente in ein Gerät zur Energiezufuhr, das geeignet ist, der Komponente zumindest lokal Energie zuzuführen;
- Verwenden des Geräts zur Energiezufuhr gemäß einem vordefinierten Betriebsprogramm, um dem Chromelement zumindest lokal Energie zuzuführen, um eine irreversible Reaktion seines Pigments zu bewirken;
- Entnehmen der Komponente aus dem Gerät zur Energiezufuhr; wobei das Verfahren **dadurch gekennzeichnet ist, dass** das Gerät zur Energiezufuhr eine fokussierte energetische Strahlung ermöglicht.

2. Verfahren nach Anspruch 1, **dadurch gekennzeichnet, dass** das Pigment fotochrom ist.

3. Verfahren nach Anspruch 1, **dadurch gekennzeichnet, dass** das Pigment thermochrom ist.

4. Verfahren nach einem der vorstehenden Ansprüche, **dadurch gekennzeichnet, dass** das Pigment geeignet ist, von einer ersten Farbe in eine zweite Farbe zu wechseln, wobei der Farbton der zweiten Farbe vom zugeführten Energieeintrag abhängt.

5. Verfahren nach einem der vorstehenden Ansprüche, **dadurch gekennzeichnet, dass** die Matrix eine Hartlackmatrix ist, bestehend aus einem Bindemittel, in welches das Pigment eingemischt ist, wobei dieses Bindemittel ausgewählt ist aus der Gruppe der Acryle, der Acrylcopolymere oder der Polyurethane, einem Dispergiermittel vom Typ Polycarbonsäuresalz, einem Weichmacher vom Typ Benzoat sowie einem aus der Gruppe der Glykole oder Ester ausgewählten Lösungsmittel.

6. Verfahren nach einem der Ansprüche 1 bis 5, **dadurch gekennzeichnet, dass** die Matrix vom Typ Laque Souple ist, bestehend aus einem Bindemittel, in das das Pigment eingemischt ist, wobei dieses Bindemittel aus der Gruppe der Silikone oder Polyurethane ausgewählt ist.

7. Verfahren nach einem der Ansprüche 1 bis 5, **dadurch gekennzeichnet, dass** die Matrix eine Tintenmatrix ist, bestehend aus einem Bindemittel, das aus der Gruppe der Acryle, der Polyurethane oder der Silikone ausgewählt ist; einem Dispergiermittel oder Antiflockungsmittel vom Typ Polycarbonsäuresalz, einem Weichmacher und Haftvermittler vom Typ Sulfonamid sowie einem aus der Gruppe der Glykole oder Ester ausgewählten Lösungsmittel.

8. Verfahren nach einem der Ansprüche 1 bis 6, **dadurch gekennzeichnet, dass** das erste Material und die Matrix eine Einheit bilden, so dass das Pigment direkt in die Komponente eingearbeitet werden kann.

9. Verfahren nach Anspruch 7, **dadurch gekennzeichnet, dass** das Chromelement eine Schicht (13) ist, die zumindest teilweise auf der Oberfläche der Komponente abgeschieden ist.

10. Verfahren nach Anspruch 5 oder 6, **dadurch gekennzeichnet, dass** das Chromelement die Form eines Einsatzes (14) aufweist.

11. Verfahren nach Anspruch 2, **dadurch gekennzeichnet, dass** das Gerät zur Energiezufuhr zum Bereitstellen von Lichtenergie vorgesehen ist.

12. Verfahren nach Anspruch 3, **dadurch gekennzeichnet, dass** das Gerät zur Energiezufuhr zum Bereitstellen von Wärmeenergie vorgesehen ist.

13. Verfahren nach einem der vorstehenden Ansprüche, **dadurch gekennzeichnet, dass** das Gerät zur Energiezufuhr so angeordnet ist, dass es die Energie einem bestimmten Punkt zuführt.

## Claims

1. A process for manufacturing a timepiece or jewellery component (10), said component being manufactured from a first material, the process comprising the following steps:
- obtaining the component, said component having undergone, at the very latest during this step, a treatment directed toward combining the component with a chromic element (12), said chromic element being constituted of at least one pigment of the photochromic or thermochromic type that is capable of reacting irreversibly to a light or heat energy supply and of a matrix for binding said pigment, the chromic element (12) being a mixture of three pigments, a red pigment, a yellow pigment and a blue pigment, each pigment being chosen to react at a specific energy level;
- placing said component in a machine for supplying energy that is capable of at least locally supplying energy to said component;
- using the energy supply machine in a predefined operating program so as at least locally to provide energy to said chromic element so as to bring about an irreversible type of reaction of its pigment;
- removing the component from the energy supply machine; the process being **characterized in that** the energy supply machine allows for focused energy radiation.

2. The process as claimed in claim 1, **characterized in that** the pigment is of the photochromic type.

3. The process as claimed in claim 1, **characterized in that** the pigment is of the thermochromic type.

4. The process as claimed in one of the preceding claims, **characterized in that** the pigment is capable of passing from a first color to a second color, the shade of the second color being dependent on the energy level supplied.

5. The process as claimed in one of the preceding claims, **characterized in that** the matrix is of the hard lacquer type constituted of a binder in which the pigment is mixed, this binder being chosen from the family of acrylics, acrylic copolymers or polyurethanes, a dispersant of the polycarboxylic acid salt type, a plasticizer of the benzoate type, and a solvent chosen from the family of glycols or esters.

6. The process as claimed in one of claims 1 to 5, **characterized in that** the matrix is of the supple lacquer type constituted of a binder in which the pigment is mixed, said binder being chosen from the family of silicones or polyurethanes.

7. The process as claimed in one of claims 1 to 5, **characterized in that** the matrix is of the ink type constituted of a binder chosen from the family of acrylics or polyurethanes or silicones; of a dispersant or anti-flocculant agent of the polycarboxylic acid salt type, a plasticizer and adhesion promoter of the sulfonamide type and a solvent chosen from the family of glycols or esters.

8. The process as claimed in one of claims 1 to 6, **characterized in that** the first material and the matrix form a single entity, such that the pigment can be integrated directly into said component.

9. The process as claimed in claim 7, **characterized in that** the chromic element is a layer (13) at least partially deposited on the surface of said component.

10. The process as claimed in claim 5 or 6, **characterized in that** the chromic element is in the form of an insert (14).

11. The process as claimed in claim 2, **characterized in that** the energy supply machine is set up to provide light energy.

12. The process as claimed in claim 3, **characterized in that** the energy supply machine is set up to provide thermal energy.

13. The process as claimed in one of the preceding claims, **characterized in that** the energy supply machine is set up to provide the energy at a precise point.
